# EUROPEAN PATENT APPLICATION

(11) **EP 4 759 679 A1**
(43) Date of publication of application: **17.06.2026**
(21) Application number: 25221325.1
(22) Date of filing: 08.12.2025
(51) Int. Cl.: B62D 15/02, B60W 30/06

(54) **PARK DISTANCE ADJUSTMENT FOR BOOT CLEARANCE**

(30) Priority: 12.12.2024 GB 202418232
(71) Applicant: Jaguar Land Rover Limited, Coventry, Warwickshire CV3 4LF (GB)
(72) Inventor: Akmal, Haseeb, Coventry, CV3 4LF (GB); Abraham, Matthew, Coventry, CV3 4LF (GB); Denny, Nicholas, Coventry, CV3 4LF (GB); Omar, Abdihafid, Coventry, CV3 4LF (GB); Giles, Mark, Coventry, CV3 4LF (GB); Cai, Zhulin, Coventry, CV3 4LF (GB)
(74) Representative: Jaguar Land Rover Patents Department

(57) **Abstract**

Aspects of the present invention relate to a method (500), a control system (100) and a vehicle (300) for controlling a parking manoeuvre of a vehicle. The method includes controlling a driving unit (120) to perform a first reversing manoeuvre to reverse the vehicle into an area in which the vehicle is to be parked. The method further includes receiving an object detection signal (112) from a first sensing means (202) of the vehicle, where the object detection signal is indicative of a presence of an external object (410) detected at a rear of the vehicle and a distance between the detected external object and the vehicle. The method additionally includes controlling the driving unit to stop the first reversing manoeuvre in response to the object detection signal indicating that the external object is within a first predetermined distance of the vehicle. The method also includes controlling, in response to receiving a user input, the driving unit to perform a second reversing manoeuvre to continue to reverse the vehicle into the area. The method also includes receiving a boundary detection signal from a second sensing means (204) of the vehicle, where the boundary detection signal is indicative of a presence of an external boundary indicator indicating a parking boundary. The method further includes controlling the driving unit to stop the second reversing manoeuvre in response to the boundary detection signal indicating that the vehicle is within the parking boundary.

## Description

### TECHNICAL FIELD

The present disclosure relates to a method of adjusting a parking distance for boot clearance. Aspects of the invention relate to a method, a control system, and a vehicle.

### BACKGROUND

It is known to provide automated vehicle parking systems for parking a vehicle into a suitable parking area. However, it can be challenging for the automated system to park such that there is sufficient boot (or trunk) clearance space for a user to access a boot of the vehicle without also having a portion of the vehicle protruding out of the parking area.

It is an aim of the present invention to address one or more of the disadvantages associated with the prior art.

### SUMMARY OF THE INVENTION

Aspects and embodiments of the invention provide a method, a control system and a vehicle as claimed in the appended claims.

According to an aspect of the present invention there is provided a method for controlling a parking manoeuvre of a vehicle. The method includes controlling a driving unit to perform a first reversing manoeuvre to reverse the vehicle into an area in which the vehicle is to be parked. The method further includes receiving an object detection signal from a first sensing means of the vehicle, where the object detection signal is indicative of a presence of an external object detected at a rear of the vehicle and a distance between the detected external object and the vehicle. The method additionally includes controlling the driving unit to stop the first reversing manoeuvre in response to the object detection signal indicating that the external object is within a first predetermined distance of the vehicle. The method also includes controlling, in response to receiving a user input, the driving unit to perform a second reversing manoeuvre to continue to reverse the vehicle into the area.

Advantageously, this method enables a vehicle user to access the boot or rear compartment or trunk of the vehicle before the vehicle is fully reversed into the parking area. The external object at the rear of the vehicle may impede access to the boot of the vehicle once the vehicle has reversed into the parking area. Detecting the external object and stopping the first reversing manoeuvre when the vehicle is within a predetermined distance of the external object ensures that a user of the vehicle has sufficient space to access the boot.

Moreover, when a single reversing manoeuvre is performed, it may be difficult for a vehicle to reverse far enough back that the vehicle does not protrude from the parking area whilst still leaving sufficient room for the boot of the vehicle to be accessed. By performing the first reversing manoeuvre followed by a second reversing manoeuvre, a user may access the boot and then further reverse the vehicle into the parking area so that the vehicle does not protrude.

Optionally, the method further comprises receiving a boundary detection signal from a second sensing means of the vehicle. The boundary detection signal is indicative of a presence of an external boundary indicator indicating a parking boundary. The external boundary indicator may be referred to as an external boundary object or external boundary element.

Advantageously, receiving a boundary detection signal enables a control unit of a vehicle to determine a location of the vehicle relative to the parking boundary, where the parking boundary indicates an edge or boundary of the parking area. The movement of the vehicle during the second reversing manoeuvre can be controlled based on the received boundary detection signal.

Optionally, the method also includes controlling the driving unit to stop the second reversing manoeuvre in response to the boundary detection signal indicating that the vehicle is within the parking boundary.

Advantageously, stopping the second reversing manoeuvre when the vehicle is within the parking boundary means that the vehicle does not protrude out of the parking area. When a vehicle protrudes outside a parking area, this can be inconvenient for both pedestrians and other vehicle users who have to navigate around the protruding vehicle. This method therefore improves the convenience of other vehicle users and pedestrians, whilst still ensuring that the user of the vehicle is able to access their boot.

Optionally, the external boundary indicator is the external object detected at the rear of the vehicle.

Advantageously, a distance between the external object and the vehicle may be reduced or minimised so that a front of the vehicle is further back from an area which may be used by pedestrians and other vehicles.

Optionally, controlling the driving unit to stop the second reversing manoeuvre comprises determining, from the received boundary detection signal, a distance of the external object from the rear of the vehicle. The method may further comprise stopping the second reversing manoeuvre in response to the distance of the external object from the rear of the vehicle being within a second predetermined distance.

Advantageously, this allows the vehicle to be parked within a set distance of the external object. The second predetermined distance may be chosen to allow the vehicle to be parked close to the external object so that the front of the vehicle is set far back from an area which may be used by pedestrians and other vehicles.

Optionally, the first predetermined distance is a different distance to the second predetermined distance.

Advantageously, the vehicle moves from a distance suitable for the vehicle user to access the boot to a distance suitable for the vehicle to be parked for a longer period of time.

Optionally, the second predetermined distance is less than the first predetermined distance.

Advantageously, the vehicle moves closer to the external object at the rear of the vehicle so that the front of the vehicle is further set back from an area in which pedestrians or other vehicles may travel. This reduces a likelihood of the front of the vehicle being damaged by encounters with pedestrians or other vehicles.

Optionally, the second predetermined distance is between 1cm and 30cm.

Advantageously, when the vehicle is parked close to the external object at the rear of the vehicle, the front of the vehicle remains further set back from an area which may be subject to pedestrian or other vehicle traffic. The parked vehicle is parked as unobtrusively as possible for the convenience of all other users of the surrounding area.

Optionally, the second sensing means is the first sensing means.

Advantageously, the same sensing means can be used to detect both the external object at the rear of the vehicle and the external boundary indicator. This reduces the number of components required to operate the method, thus reducing both an overall cost and a manufacturing complexity.

Optionally, the external boundary indicator comprises one or more parking space markings on a ground.

Advantageously, this ensures that the vehicle is parked in consideration of both the detected external object and the parking space markings provided on the ground.

Optionally, controlling the driving unit to stop the second reversing manoeuvre comprises stopping the second reversing manoeuvre in response to the boundary detection signal indicating that the vehicle is within one or more boundaries set by the one or more parking space markings.

Advantageously, this ensures that the vehicle is parked within the boundaries of the parking area or bay. The vehicle therefore does not protrude outside the designated parking area, which improves the convenience for pedestrians and other vehicle users.

Optionally, the first predetermined distance is set in dependence on an amount of boot clearance required by the vehicle.

Advantageously, this ensures that the vehicle user has adequate space to access the boot of the vehicle. Different vehicles have different boot clearance requirements according to, for instance, a size of the boot door or an opening mechanism of the boot door. Setting the first predetermined distance in dependence on an amount of boot clearance required by the vehicle, rather than having a set first predetermined distance applicable to all vehicles, improves a user experience by ensuring that the vehicle user can access the boot without having excessive protrusion of the vehicle outside of the parking area.

Optionally, the user input is received by a remote device or by an input means within the vehicle.

Advantageously, the user input being received by a remote device means that the user does not need to be in the vehicle for the vehicle to perform the second reversing manoeuvre. This improves a user convenience and experience, especially if the user is holding or looking after the items obtained from the boot.

Advantageously, the user input being received by an input means within the vehicle means that the user cannot accidentally activate the second reversing manoeuvre before the user has finished using the boot. Optionally, the method further comprises controlling a locking unit to lock one or more doors or a boot of the vehicle in response to stopping the second reversing manoeuvre.

Advantageously, this prevents a user from accidentally leaving the doors of the vehicle unlocked. Furthermore, this improves a user convenience since the user does not need to manually lock the doors of the vehicle or provide any further inputs to lock the doors of the vehicle.

Optionally, the method further comprises controlling an engine unit to turn off an engine of the vehicle in response to stopping the second reversing manoeuvre.

Advantageously, this conserves a battery or fuel use of the vehicle because there is no need to wait for a human input to turn off the engine. Furthermore, this improves user convenience since the user does not need to manually turn off the engine.

Optionally, the external object has a height of at least a predetermined height.

External objects having a predetermined height (e.g. which vertically reaches the space in which the boot door will move if opened/closed, such as a wall or bollard) are likely to impede a user's access to the boot of the vehicle when the vehicle is parked (whereas, for example, a curbstone of around 10cm in height is unlikely to impede opening of a boot). Advantageously, the vehicle does not unnecessarily stop a first predetermined distance away from an external object which is unlikely to impact the user's access to the boot. This prevents the vehicle from unnecessarily protruding from a parking area.

According to another aspect of the invention, there is provided a control system for controlling a parking manoeuvre of a vehicle. The control system comprises one or more controllers collectively comprising at least one electronic processor having an electrical input for receiving an input signal and at least one memory device electrically coupled to the at least one electronic processor and having instructions stored therein. The at least one electronic processor is configured to access the at least one memory device and execute the instructions thereon so as to: control a driving unit to perform a first reversing manoeuvre to reverse the vehicle into an area in which the vehicle is to be parked; receive an object detection signal from a first sensing means, the object detection signal indicative of a presence of an external object detected at a rear of the vehicle and a distance between the detected external object and the vehicle; control the driving unit to stop the first reversing manoeuvre in response to the object detection signal indicating that the external object is within a first predetermined distance of the vehicle; control, in response to receiving a user input, the driving unit to perform a second reversing manoeuvre to continue to reverse the vehicle into the area; receive a boundary detection signal from a second sensing means of the vehicle, the boundary detection signal indicative of a presence of an external boundary indicator indicating a parking boundary; and control the driving unit to stop the second reversing manoeuvre in response to the boundary detection signal indicating that the vehicle is within the parking boundary.

According to another aspect of the present invention, there is provided a control system for controlling a parking manoeuvre of a vehicle. The control system comprises a first sensing means for detecting an external object at a rear of the vehicle and a second sensing means for detecting an external boundary indicator indicating a parking boundary. The control system further comprises a driving unit for performing a reversing manoeuvre. The control system additionally comprises one or more controllers collectively comprising at least one electronic processor having an electrical input for receiving an input signal and at least one memory device electrically coupled to the at least one electronic processor and having instructions stored therein. The at least one electronic processor is configured to access the at least one memory device and execute the instructions thereon so as to: control the driving unit to perform a first reversing manoeuvre to reverse the vehicle into an area in which the vehicle is to be parked; receive an object detection signal from a first sensing means of the vehicle, the object detection signal indicative of a presence of an external object detected at a rear of the vehicle and a distance between the detected external object and the vehicle; control the driving unit to stop the first reversing manoeuvre in response to the object detection signal indicating that the external object is within a first predetermined distance of the vehicle; control, in response to receiving a user input, the driving unit to perform a second reversing manoeuvre to continue to reverse the vehicle into the area; receive a boundary detection signal from a second sensing means of the vehicle, the boundary detection signal indicative of a presence of an external boundary indicator indicating a parking boundary; and control the driving unit to stop the second reversing manoeuvre in response to the boundary detection signal indicating that the vehicle is within the parking boundary.

According to another aspect of the invention, there is provided a vehicle comprising a control system for controlling a parking manoeuvre of a vehicle.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
FIG. 1 shows a schematic representation of a control system according to an embodiment of the invention.
FIG. 2 shows a schematic representation of a control system according to an embodiment of the invention.
FIG. 3 shows a vehicle in accordance with an embodiment of the invention.
FIG. 4A shows a first example of a type of external boundary indicator in accordance with an embodiment of the invention.
FIG. 4B shows a second example of a type of external boundary indicator in accordance with an embodiment of the invention.
FIG. 5 shows an example of a method in accordance with an embodiment of the invention.
FIG. 6A illustrates an example of a movement of a vehicle in accordance with an embodiment of the invention.
FIG. 6B illustrates an aspect of the subject matter in accordance with one embodiment.
FIG. 6C illustrates an aspect of the subject matter in accordance with one embodiment.

### DETAILED DESCRIPTION

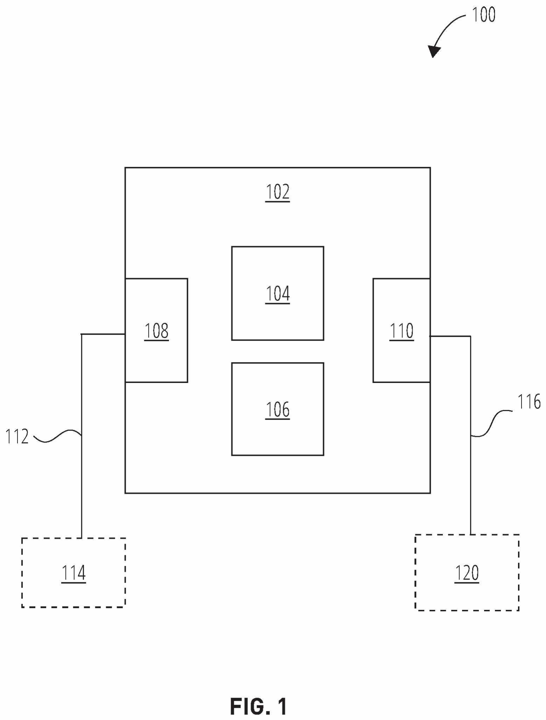

With reference to FIG. 1, there is illustrated a control system 100 for a vehicle. The control system 100 comprises one or more controllers 110.

The control system 100 as illustrated in FIG. 1 comprises one controller 102, although it will be appreciated that this is merely illustrative. The controller 102 comprises processing means 104 and memory means 106. The processing means 104 may be one or more electronic processing devices (processors) which operably execute computer-readable instructions. The memory means 106 may be one or more memory devices 106. The memory means 106 is electrically coupled to the processing means 104. The memory means 106 is configured to store instructions, and the processing means 104 is configured to access the memory means 106 and execute the instructions stored thereon.

The control system 100 further comprises an input means 108 and an output means 110. The input means 108 may comprise an electrical input 108 of the controller 102. The output means 110 may comprise an electrical output 110 of the controller 102. The input means 108 is configured to receive one or more electrical signals 112 from one or more sensing means 114. The controller 102 is configured to determine, in dependence on the received one or more electrical signals 112, a reversing manoeuvre to be performed by the vehicle. The output means 110 is configured to output one or more output signals 116 to the driving unit 120 to cause the driving unit to perform a reversing manoeuvre.

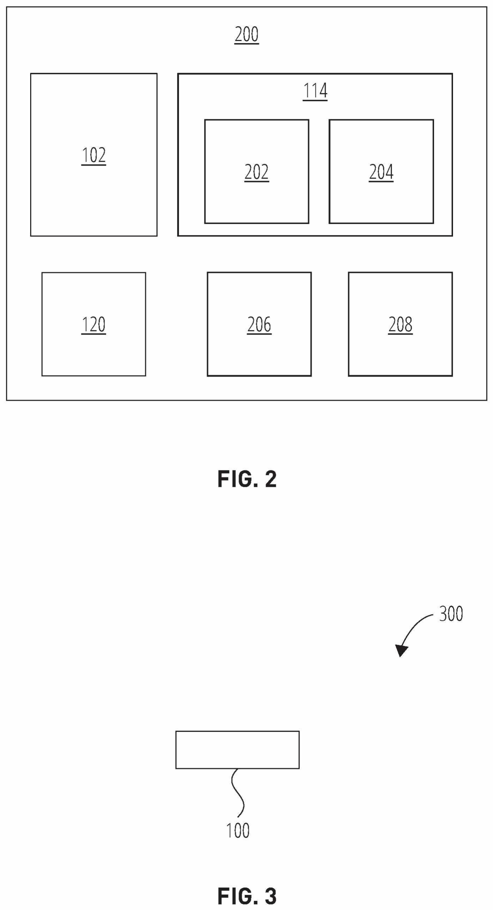

With reference to FIG. 2, there is illustrated another example of a boot (or trunk) clearance control system 200 for a vehicle.

The boot clearance control system 200 comprises one or more controllers 102. Each of the one or more controllers 102 comprises a processing means 104 and a memory means 106.

The boot clearance control system 200 further comprises a first sensing means 202, a second sensing means 204 and a driving unit 120. The boot clearance control system 200 may further comprise an engine unit 206 and a locking unit 208.

The controller 102 is configured to receive an object detection signal from a first sensing means 202. The first sensing means 202 may comprise one or more sensors, such as ultrasonic sensors, radar sensors or cameras. The object detection signal is an electrical signal output by the first sensing means 202. The object detection signal may be one of the one or more electrical signals 112 discussed in relation to FIG. 1. The object detection signal includes data which is indicative of a presence of an external object detected at a rear of the vehicle and a distance between the vehicle and the detected external object. The rear of the vehicle may be defined as the portion of the vehicle where the boot (or trunk) is located. The rear of the vehicle may be defined as the back of the vehicle when the vehicle travels in a usual forward direction of travel.

The controller 102 is configured to determine a distance between the vehicle and the detected object based on the received object detection signal. The controller 102 is configured to determine a distance between the rear of the vehicle and the detected object based on the received object detection signal. The processing means 104 may process the object detection signal to determine the distance between the vehicle and the detected external object.

The controller 102 is configured to output a first control signal to control a driving unit 120 in dependence on the determined distance between the vehicle and the detected external object. The processing means 104 may output the first control signal. The driving unit 120 is controlled to stop performing a first reversing manoeuvre when the distance between the vehicle and the detected external object is a first predetermined distance.

The controller 102 may be configured to determine a height of a detected external object based on the received object detection signal. The first sensing means 202 may detect external objects having at least a predetermined height, or may transmit an object detection signal if the detected external object has a height of at least the predetermined height. The driving unit 120 may be controlled to stop performing a first reversing manoeuvre in response to a determination that the vehicle is within a first predetermined distance of an external object having at least a predetermined height.

The controller 102 is further configured to receive a boundary detection signal from a second sensing means 204. The second sensing means 204 may comprise one or more sensors, such as ultrasonic sensors, radar sensors or cameras. The second sensing means 204 may be the same type of sensing means as the first sensing means 202. The first sensing means 202 and the second sensing means 204 may be the same entity.

The boundary detection signal is an electrical signal output by the second sensing means 204. The boundary detection signal includes data which is indicative of a presence of an external boundary indicator and a distance between the vehicle and the external boundary indicator. The external boundary indicator is indicative of a boundary of a parking area. The controller 102 is configured to determine a distance between the vehicle and the detected external boundary indicator based on the received boundary detection signal. The processing means 104 may perform this operation. The controller 102 is configured to output a second control signal to control a driving unit 120 in dependence on the determined distance between the vehicle and the detected external boundary indicator. The processing means 104 may perform this operation.

The control system 100 is configured to receive, at an input unit 122, an input signal indicative of a user input being received at an input means. The user input may be provided to a remote device or to a input means, such as a touchscreen display or button, located within or on the vehicle. The user may provide an input to commence a first reversing manoeuvre. The user provides an input to commence a second reversing manoeuvre. In response to the input unit 122 receiving the input signal, the control system 100 may control the driving unit 120 according to the received input signal. The processing means 104 may output a driving unit control signal to the driving unit 120 in response to the input unit 122 receiving the input signal.

The control system 100 may further comprise an engine unit 206. The engine unit 206 may be controlled by the controller 102 or processing means 104 to turn off the engine of the vehicle 300. The engine unit 206 may be controlled to turn off the engine when the second reversing manoeuvre is complete.

The control system may further comprise a locking unit 208. The locking unit 208 may be controlled by the controller 102 or processing means 104 to lock one or more doors of the vehicle 300. The locking unit 208 may be controlled to lock one or more doors of the vehicle 300 when the second reversing manoeuvre is complete.

The engine unit 206 and the locking unit 208 may be controlled in any order, or simultaneously.

FIG. 3 illustrates a vehicle 300 according to an embodiment of the present invention. As shown in FIG. 3, the vehicle 300 is an automotive vehicle such as a road vehicle (e.g. a fuelled, electric, or hybrid vehicle). The vehicle 300 may have a boot, e.g. a door or hatch to the rear of the vehicle which covers and enables user access to some storage space in the vehicle.

The vehicle 300 comprises a control system 100 as illustrated in FIG. 1. The vehicle 300 may comprise a boot clearance control system 200 as illustrated in FIG. 2.

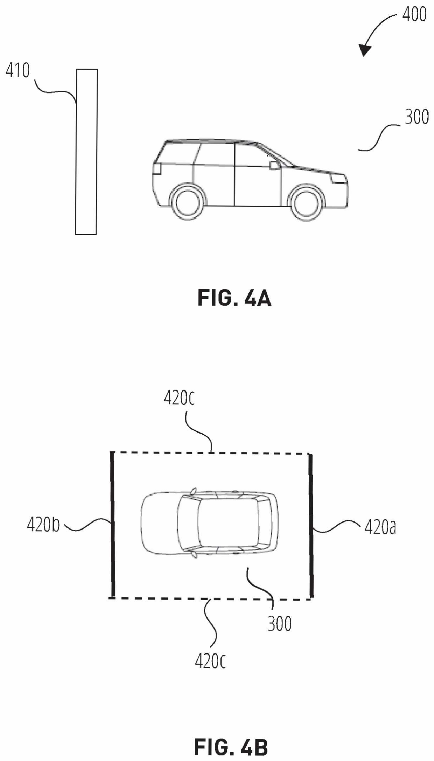

Figures 4A and 4B show examples of different types of external boundary indicator 400. An external boundary indicator is an object or marking which shows at least a portion of a boundary of a parking area.

As shown in Figure 4A, the external boundary indicator 400 may be a solid object 410. The solid object 410 may be a permanent or semi-permanent structure which is intended to be in place for at least a predetermined amount of time to indicate at least a portion of a boundary of a parking area. The solid object 410 may be a wall, fence, hedge, bollard, gate, pillar, post, kerb, other vehicle or other object. The solid object 410 may have a height of at least 1cm, at least 2cm, at least 5 cm, at least 10cm or at least 30cm.

The external boundary indicator may be the same object as the external object detected by the first sensing means 202. The second sensing means 204 may detect one or more solid objects 410 and transmit a boundary detection signal for each of the detected solid objects 410 to the processing means 104. The processing means 104 may analyse the received boundary detection signals to determine whether the vehicle is within a predetermined distance of each of the one or more detected solid objects 410.

Figure 4B is a top-down view of a vehicle 300 and a plurality of external boundary indicators around the vehicle 300. The external boundary indicator 400 may be markings painted, embedded within, projected on or otherwise presented on a floor or ground of an environment. Such markings are frequently found in car parks near, for example, supermarkets, shopping centres, leisure centres, sporting arenas, entertainment venues, educational establishments, hospitals, offices and other buildings, to indicate individual parking bays.

The external boundary indicator 400 may be a marking 420a provided on the ground towards the rear of the vehicle 300. The external boundary indicator 400 may be a marking 420b provided on the ground towards a front of the vehicle 300. The external boundary indicator 400 may be a marking 420c provided on the ground at one or more sides of the vehicle 300.

The second sensing means 204 may detect one or more external boundary indicators 400 and transmit a boundary detection signal for each of the detected external boundary indicators 400 to the processing means 104. The processing means 104 may analyse the received boundary detection signals to determine whether the vehicle is within an area indicated by the external boundary indicators.

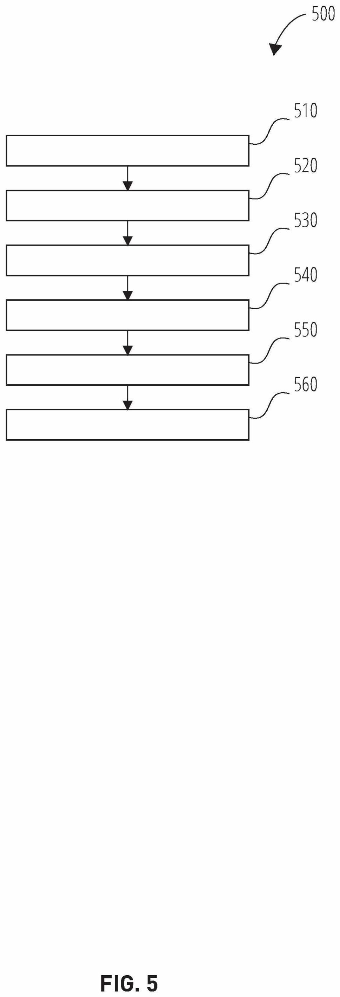

FIG. 5 illustrates a method 500 according to an embodiment of the invention. The method 500 is a method of controlling a parking manoeuvre of a vehicle, such as the vehicle 300 illustrated in FIG. 3. The method 500 may be performed by the control system 100 illustrated in FIG. 1. In particular, the memory means 106 may comprise computer-readable instructions which, when executed by the processing means 104, perform the method 500 according to an embodiment of the invention.

The method 500 comprises controlling 510 a driving unit to perform a first reversing manoeuvre to reverse the vehicle into an area in which the vehicle is to be parked. The driving unit 120 may be controlled in response to a user input indicating an intention to park the vehicle 300 with boot clearance.

The method 500 further comprises receiving 520 an object detection signal from a first sensing means of the vehicle. The object detection signal is a signal which indicates a presence of an external object detected at a rear of the vehicle and a distance between the detected external object and the vehicle. The processing means 104 may process the object detection signal to determine the distance between the vehicle and the detected external object.

The method 500 also comprises controlling 530 the driving unit to stop the first reversing manoeuvre in response to the object detection signal indicating that the external object is within a first predetermined distance of the vehicle. The first predetermined distance 610 may be set in dependence on an amount of boot clearance required by the vehicle 300.

The method 500 additionally comprises controlling 540, in response to receiving a user input, the driving unit to perform a second reversing manoeuvre to continue to reverse the vehicle into the area. The user input may be provided to a remote device, such as a fob. The user input may be provided to an inbuilt input device provided in or on the vehicle.

The method 500 further comprises receiving 550 a boundary detection signal from a second sensing means of the vehicle. The boundary detection signal is a signal which indicates a presence of an external boundary indicator indicating a parking boundary.

The method 500 also comprises controlling 560 the driving unit to stop the second reversing manoeuvre in response to the boundary detection signal indicating that the vehicle is within the parking boundary.

The method 500 may further comprise controlling an engine unit 206 to deactivate or turn off the vehicle 300. This may comprise turning off the engine of a vehicle comprising an internal combustion engine. This may comprise deactivating or turning off a battery of a battery operated electric vehicle. This may comprise powering down the vehicle 300 so that the drive unit of the vehicle is not operational. This may comprise isolating a power source, such as a battery or engine, of the vehicle 300 from the driving unit 120.

The method 500 may further comprise controlling a locking unit 208 to lock one or more doors of the vehicle. The one or more doors may comprise one or more doors through which a user of the vehicle may enter or exit the vehicle. The one or more doors may comprise one or more boot doors of the vehicle.

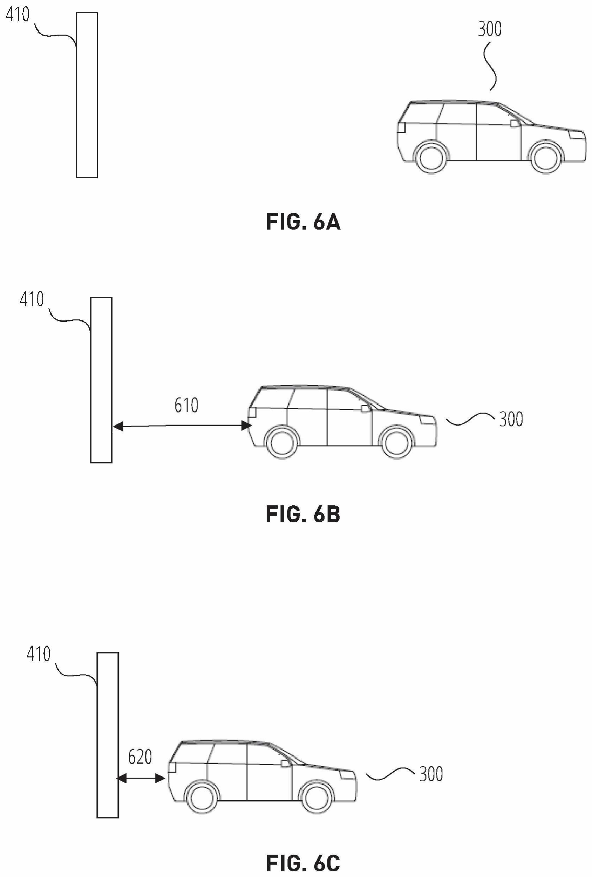

Figures 6A to 6C illustrate an example of a movement of a vehicle in accordance with an embodiment of the invention. In this example, the external boundary indicator 400 is the same object as the external object detected by the first sensing means 202, but the skilled person would recognize that this is not necessary for the invention to be implemented.

In Figure 6A, the vehicle 300 performs a first reversing manoeuvre and reverses towards the external object 410.

In Figure 6B, the first sensing means 202 detects the presence of the external object 410 and transmits and object detection signal to the processing means 104. When the object detection signal received at the processing means 104 indicates that the external object 410 is within a first predetermined distance 610 of the vehicle 300, the processing means 104 controls the driving unit 120 to stop reversing the vehicle 300 and to stop the vehicle 300.

The first predetermined distance 610 is a distance sufficient for a user of the vehicle to access the boot of the vehicle. The first predetermined distance 610 may be a distance of at least 0.5m, at least 1m or at least 1.5m. The first predetermined distance 610 may be set in dependence on an amount of boot clearance required for the vehicle 300. The amount of boot clearance may be the distance required between the rear of the vehicle and the external object for the boot door to fully open. For example, a vehicle with a side-hinge opening or barn-door style boot may require more boot clearance than a hatchback vehicle. In this case, the first predetermined distance 610 for the vehicle with a side-hinge opening boot may be greater than the first predetermined distance 610 for the hatchback vehicle.

In Figure 6C, the vehicle 300 commences the second reversing manoeuvre in response to receiving a user input. The second sensing means 204, which may be the same as the first sensing means 202, detects the boundary indicator 410 and transmits a boundary detection signal to the processing means 104. The processing means 104 controls the driving unit 120 to stop the second reversing manoeuvre in response to the boundary detection signal indicating that the vehicle is within a parking boundary. In this case, the vehicle being within the parking boundary may comprise a distance between the vehicle 300 and the boundary indicator 410 being within a second predetermined distance 620. The second predetermined distance 620 may be less than the first predetermined distance 610. The second predetermined distance 620 may be a distance of 8cm.

It will be appreciated that various changes and modifications can be made to the present invention without departing from the scope of the present application.

## Claims

1. A method for controlling a parking manoeuvre of a vehicle, the method comprising:
controlling a driving unit to perform a first reversing manoeuvre to reverse the vehicle into an area in which the vehicle is to be parked;
receiving an object detection signal from a first sensing means of the vehicle, the object detection signal indicative of a presence of an external object detected at a rear of the vehicle and a distance between the detected external object and the vehicle;
controlling the driving unit to stop the first reversing manoeuvre in response to the object detection signal indicating that the external object is within a first predetermined distance of the vehicle;
controlling, in response to receiving a user input, the driving unit to perform a second reversing manoeuvre to continue to reverse the vehicle into the area;
receiving a boundary detection signal from a second sensing means of the vehicle, the boundary detection signal indicative of a presence of an external boundary indicator indicating a parking boundary; and
controlling the driving unit to stop the second reversing manoeuvre in response to the boundary detection signal indicating that the vehicle is within the parking boundary.

2. The method of claim 1, wherein the external boundary indicator is the external object detected at the rear of the vehicle.

3. The method of claim 2, wherein controlling the driving unit to stop the second reversing manoeuvre comprises:
determining, from the received boundary detection signal, a distance of the external object from the rear of the vehicle; and
stopping the second reversing manoeuvre in response to the distance of the external object from the rear of the vehicle being within a second predetermined distance.

4. The method of claim 3, wherein the first predetermined distance is a different distance to the second predetermined distance.

5. The method of claim 3 or 4, wherein the second predetermined distance is less than the first predetermined distance.

6. The method of any one of claims 3 to 5, wherein the second predetermined distance is between 1cm and 30cm.

7. The method of any one of claims 2 to 6, wherein the second sensing means is the first sensing means.

8. The method of claim 1, wherein the external boundary indicator comprises one or more parking space markings on a ground.

9. The method of claim 8, wherein controlling the driving unit to stop the second reversing manoeuvre comprises:
stopping the second reversing manoeuvre in response to the boundary detection signal indicating that the vehicle is within one or more boundaries set by the one or more parking space markings.

10. The method of any of the preceding claims, wherein the first predetermined distance is set in dependence on an amount of boot clearance required by the vehicle.

11. The method of any of the preceding claims, wherein the user input is received by a remote device or by an input means within the vehicle.

12. The method of any of the preceding claims, further comprising:
controlling a locking unit to lock one or more doors or a boot of the vehicle in response to stopping the second reversing manoeuvre.

13. The method of any of the preceding claims, wherein the external object has a height of at least a predetermined height.

14. A control system for controlling a parking manoeuvre of a vehicle, the control system comprising:
a first sensing means for detecting an external object at a rear of the vehicle;
a second sensing means for detecting an external boundary indicator indicating a parking boundary;
a driving unit for performing a reversing manoeuvre;
one or more controllers collectively comprising at least one electronic processor having an electrical input for receiving an input signal; and
at least one memory device electrically coupled to the at least one electronic processor and having instructions stored therein;
wherein the at least one electronic processor is configured to access the at least one memory device and execute the instructions thereon so as to:
control the driving unit to perform a first reversing manoeuvre to reverse the vehicle into an area in which the vehicle is to be parked;
receive an object detection signal from a first sensing means of the vehicle, the object detection signal indicative of a presence of an external object detected at a rear of the vehicle and a distance between the detected external object and the vehicle;
control the driving unit to stop the first reversing manoeuvre in response to the object detection signal indicating that the external object is within a first predetermined distance of the vehicle;
control, in response to receiving a user input, the driving unit to perform a second reversing manoeuvre to continue to reverse the vehicle into the area;
receive a boundary detection signal from a second sensing means of the vehicle, the boundary detection signal indicative of a presence of an external boundary indicator indicating a parking boundary; and
control the driving unit to stop the second reversing manoeuvre in response to the boundary detection signal indicating that the vehicle is within the parking boundary.

15. A vehicle comprising a control system according to claim 14.
